# EUROPÄISCHE PATENTANMELDUNG

(11) **EP 2 251 786 A2**
(43) Veröffentlichungstag der Anmeldung: **17.11.2010**
(21) Anmeldenummer: 10157264.2
(22) Anmeldetag: 23.03.2010
(51) Int. Cl.: G06F 9/50, G06F 9/46

(54) **Verfahren zum Nachbilden eines Dienstes auf einem Host/Server und Computerverarbeitungseinheit zum Durchführen des Verfahrens**

(30) Priorität: 15.05.2009 DE 102009021520
(71) Anmelder: SIEMENS AKTIENGESELLSCHAFT, 80333 München (DE)
(72) Erfinder: Loeser, Christoph, 59555 Lippstadt (DE); Thronicke, Wolfgang, 33154 Salzkotten (DE)

(57) **Zusammenfassung**

Die Erfindung betrifft ein Verfahren zum Nachbilden eines Dienstes auf einem Host/Server und eine Vorrichtung zum Durchführen des Verfahrens.

Ein Rechnerknoten puffert einmal durchgeführte (Web-)Service-aufrufe und bildet über einen definierten Zeitraum diesen Serviceaufruf mit dem Ergebnis nach (Mimikry-Service). Es wird ein Caching der Input-Output Tupel des (Web-)Service-Aufrufs nachgebildet. Für die gespeicherten Aufrufe agiert der Mimikry-Host wie der Original (Web-)Service. Dieses Verfahren eignet sich besonders für dynamische Netzwerke mit adhoc Charakter, da so ein verbundener Rechner den Service des Originals für einen definierten Zeitraum nachbilden kann.

## Beschreibung

Die Erfindung betrifft ein Verfahren zum Nachbilden eines Dienstes auf einem Host/Server und eine Computerverarbeitungseinheit zum Durchführen des Verfahrens.

Serviceorientierte Architekturen, abgekürzt SOA, zeichnen sich typischerweise durch die folgenden drei Komponenten aus:
- S - Service Provider
- C - Service Requester
- D - Directory (Service Broker), wird durch den Service Provider über den Ort, die Funktionalität und die Signatur informiert.

Aus Wikipedia "Serviceorientierte Architektur" Ausdruck vom Mai 2009, ist der Begriff der Serviceorientierten Architektur ausführlich offenbart.

Beim klassischen Service-Ansatz registriert sich der Service Provider bei einem Directory (im Falle von WebServices bei einem UDDI-Broker) durch Hinterlegen der Schnittstellenbeschreibung (WSDL) (sog. publish). Wird eine Suchanfrage an das Directory (UDDI) gerichtet (find) liefert es die entsprechende Schnittstellenbeschreibung und, falls eine dynamische Zuweisung erfolgt, die IP und Portnummer, über welcher der Servicenehmer diese aufrufen kann (bind).

In typischen Web-Szenarien, wo ein Browser Inhalte abruft, können statische Elemente durch einen Proxy (meist lokal) vorgehalten werden, so dass bei einer weiteren Anfrage an den Service der Proxy direkt das Ergebnis liefert, ohne die Anfrage an den eigentlichen Server weiterzugeben. Alle Anfragen gehen dabei über den Proxy, der entsprechend leistungsfähig sein muss, insbesondere wenn das zu versorgende Netz entsprechend viele Teilnehmer besitzt.

Dieses "Caching" optimiert also in bekannten Webserver Szenarien die Servicequalität und nimmt einige Last von den originären Servern. Allerdings nutzen Web-Dienste, die aktuell und mit zustandsbehafteten Session arbeiten, eine Proxy kaum.

Proxies für Webservices/Webdienste sind ungebräuchlich, da in einer SOA die Serviceleistung direkt angebunden wird, bzw. immer eine Kommunikation mit dem Serviceerbringer besteht. Außerdem sind Proxies für SOAP Kommunikation ungebräuchlich und unterstützen lediglich bestimmte browsergängige MIME-Typen.

Die Aufgabe der Erfindung besteht darin, dass ein lokaler Teilnehmer Dienste im Netz auch dann sieht, wenn diese aktuell im Netz nicht erreichbar sind.

Die Aufgabe der Erfindung wird gelöst durch die Merkmale der unabhängigen Ansprüche.

Vorteilhafte Weiterbildungen der Erfindung sind in den abhängigen Ansprüchen aufgeführt.

Im Folgenden wird der Begriff "Service" auch "Dienst" bezeichnet.

Im Folgenden wird das Verfahren zum Nachbilden eines Dienstes auf einem Server auch "Mimikry-Dienst" genannt.

Im Folgenden wird ein Server, auf dem ein "Mimikry-Dienst" läuft, auch "Mimikry-Host" genannt.

Ein Rechnerknoten puffert einmal durchgeführte Serviceaufrufe Dienstaufrufe und bildet über einen definierten Zeitraum diesen Serviceaufruf mit dem Ergebnis nach, was im Folgenden auch Service- oder Dienst-Mimikry genannt wird. Beim Service-Mimikry wird ein Service durch ein Caching der Input-Output Tupel eines Webservice-Aufrufs nachgebildet. Für die gespeicherten Aufrufe agiert der Mimikry-Host wie der Original Service. Dieses Verfahren eignet sich besonders für dynamische Netzwerke mit ad-hoc Charakter, da so ein verbundener Rechner durch die Mimikry den Service des Originals für einen definierten Zeitraum nachbilden kann.

Der Aufruf eines Services beim Service Provider findet bei diesem Verfahren wie folgt statt:
Service (Input) → (Output, 1st ServiceCall)

Der Dienst wird mit Eingabe Input aufgerufen. Als Rückgabe erhält man neben dem eigentlichen Ergebnis Result auch den Zeitpunkt des erstmaligen Aufrufes des Dienstes. Dieser Zeitpunkt kann sowohl durch den Serviceprovider selbst als auch durch den Aufrufer (in seiner Mimikry-Funktion) bereitgestellt werden.

Durch das Tupel (Service, 1st ServiceCall) kann die Eindeutigkeit des Dienstes in Kombination mit dem initialen Serviceerbringer gewährleistet werden.

Jeder (Service, 1st ServiceCall) - Dienst speichert sowohl Aufrufparameter als auch Ergebnisse in Form von (Input Output)-Tupeln.

Für die so zwischengespeicherten Ergebnisse kann der Mimikry-Host einen Dienst mit der gleichen funktionalen Eigenschaft z.B. Funktionssignatur f(Input) → Output zur Verfugung stellen. Daher kann - in Webservice Begriffen, eine identische WSDL (Web Service Description Language) Beschreibung des Dienstes geliefert werden, sofern die Adresse angepasst ist.

Mimikry-Hosts können nur sowohl aktiv als auch passiv agieren. Gemeinsam ist beiden Modi, dass wenn ein Mimikry-Host einen Service-Aufruf zu einem anderen Host (beliebig, nicht nur Mimikry-Host) durchfuhrt, er diesen Aufruf als Mimikry-Dienst anbietet.

Besteht zwischen zwei Mimikry-Hosts eine Netzwerkverbindung, dann synchronisieren sie ihre aktuellen Mimikry-Dienste (Tupel und Beschreibungen), was auch Aktives Agieren eines Mimikry-Host genannt wird.

Im passiven Modus des Mimikry-Hosts werden nur für an ihn gestellte Service-Aufrufe als Mimikry-Dienst etabliert.

Hosts beider Ausprägung können jeweils in einem Netzwerk agieren.

Genau wie bei üblichen Proxies kann auch die permanente Aktualität der Ergebnisse durch das Service-Mimikry-Verfahren nicht gewährleistet werden. Sowohl durch zeitliche Veränderung als auch durch Veränderung der Position können zurückgelieferte Ergebnisse in ihrer Qualität schwanken. Im Folgenden wird ein Verfahren zur dynamischen kontext-abhängigen Bestimmung der Qualität eines Service-Ergebnisses (Result) beschrieben:
Der oben genannte Aufruf eines Dienstes ändert sich somit zu Service (Input) → (Output, 1st ServiceCall, Q_ServiceResult)
wobei Q ServiceResult ergänzt wird, das die Qualität des Rückgabewertes beschreibt.

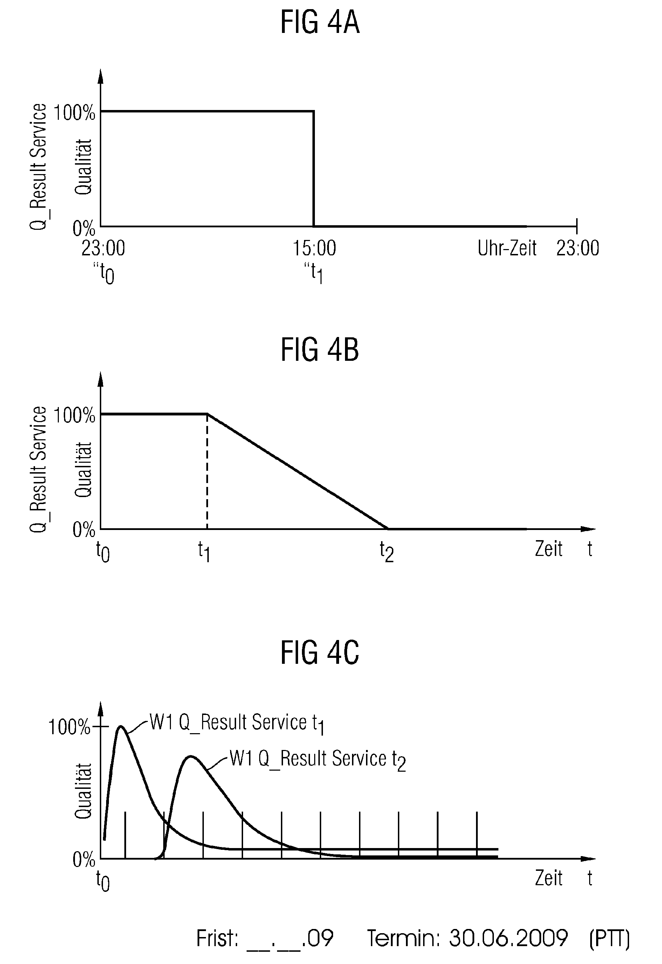

Beispiele für den Qualitätswert der Rückgabe können sein:
- Absoluter Zeitpunkt ab wann das Ergebnis keine Gültigkeit mehr besitzt.
- Ergebnis ist gültig für eine (GPS-)Position mit einem Verfallsdatum. Die Qualität ergibt sich direkt aus dem Verfallsdatum. Durch Entfernen von der Position wird auch das Verfallsdatum und simultan der Qualitätswert modifiziert.
   a) Rückgabe in Intervallwerten zu festem Zeitpunkt: GPS-Position + geschätztes Unschärfeintervall.
   b) Rückgabe über GPS-Position + zeitlich veränderbares Unschärfeintervall (endet bei max. Unschärfeintervall).
- Dienst "Füllstandsbestimmung eines Behälters":
   Letzter bekannter Füllstand eines Behälters liegt bei 70% der noch befüllt wird (Output). Der Vorgang wird noch x Stunden dauern. Der geschätzte Füllstand (mindestens 70%) kann durch die verstrichene Zeit interpoliert werden. Die Qualität dieser Schätzung Q_ServiceResult nimmt über die Zeit ab. (Abb. 4b)
- Dienst "Wettervorhersage": Wahrscheinlichkeit auf Sonne ist anfangs hoch, fällt jedoch über die Zeit stark ab. (Abb. 4c)

Auch mit nicht permanenten Netzwerkverbindungen zwischen einzelnen Rechnerknoten in dynamischen ad-hoc peer-to-peer Netzwerken, die aber eine Architektur mit SOA-artigem Charakter realisieren sollen, soll ein lokaler Teilnehmer (Client) idealerweise alle Dienste im Netz sehen, auch wenn diese aktuell nicht erreichbar sind.

Die Erfindung wird anhand der in folgenden Figuren dargestellten Ausführungsbeispiele näher erläutert.

Es zeigen:
- Figur 1: Ein Sequenzdiagramm eines ersten Teils des Ver- fahrens zum Nachbilden eines Dienstes-externer Server erreichbar, Tupel des Mimikry-Dienstes wird aktualisiert für das Zwischenspeichern von Signatur und Ergebnis aufgerufener Dienstaufru- fe
- Figur 2: Ein Sequenzdiagramm eines weiteren Teils des Verfahrens zum Nachbilden eines Dienstes- externer Server nicht erreichbar, Zugriff auf Mimikry-Dienst bis zum Absinken auf Q.
- Figur 3: Ein Sequenzdiagramm eines Verfahrens zum Syn- chronisieren mehrerer Mimikry-Server miteinan- der

- Figur 4a,b,c: jeweils Diagramm zur Darstellung der Zeitabhän- gigkeit der Ergebnisqualität des Mimikry- Dienstes für verschiedene Anwendungsfälle

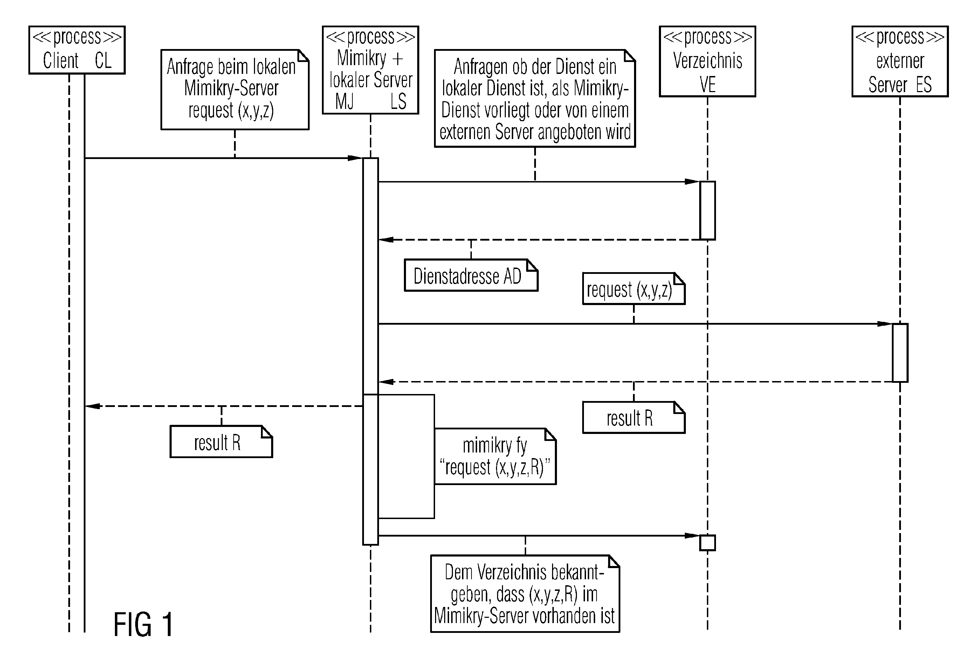

In Figur 1 ist ein Sequenzdiagramm eines ersten Teils des Verfahrens zum Nachbilden eines Dienstes dargestellt.

Es wird ein Verfahren für das Zwischenspeichern von Signatur und Ergebnis aufgerufener Dienstaufrufe beschrieben.

Das Sequenzdiagramm in Figur 1 illustriert, wie der Client CL beim Mimikry-Server MI eine Anfrage mit dem Parametertupel (x, y, z) stellt. Der Mimikry-Server MI überprüft beim Verzeichnis VE, ob der Dienst vom lokalen Server LS, vom Mimikry-Server MI oder von einem externen Server ES angeboten wird. In dem vorliegenden Fall wird die Adresse Dienstadresse des externen Servers ES vom Verzeichnis VE zurückgeliefert. Der Mimikry-Server MI startet nun über das Netz eine Anfrage request(x,y,z) beim externen Server ES und erhält das Ergebnis result R zurück. Nach dem Zurückliefern von result R an den Clienten CL wird das Tupel der Parameter und des Ergebnisses (x, y, z, R) im Mimikry-Server MI abgespeichert. Dabei erhält das Tupel vom Mimikry-Server MI oder dem externen Server einen zusätzlichen Parameter "1st ServiceCall", der den Zeitpunkt des erstmaligen bzw. letztmaligen Aufrufs des Dienstes angibt. Weiterhin kann optional das Tupel vom Mimikry-Server MI einen zusätzlichen Parameter "Q_ServiceResult" erhalten, der die Qualität des Ergebnisses result R angibt. Somit ist auf dem Mimikry-Server das Tupel (x, y, z, R) verknüpft mit dem 1st ServiceCall, Q_ServiceResult) abgespeichert. Die Ermittlung der Qualität wird in Figur 4 näher erläutert. Zuletzt wird das Verzeichnis VE aktualisiert, indem dem Verzeichnis VE bekanntgegeben wird, dass das Tupel (x, y, z, R) verknüpft mit dem Tupel (1st ServiceCall, Q_ServiceResult) auf dem Mimikry-Server MI vorhanden ist.

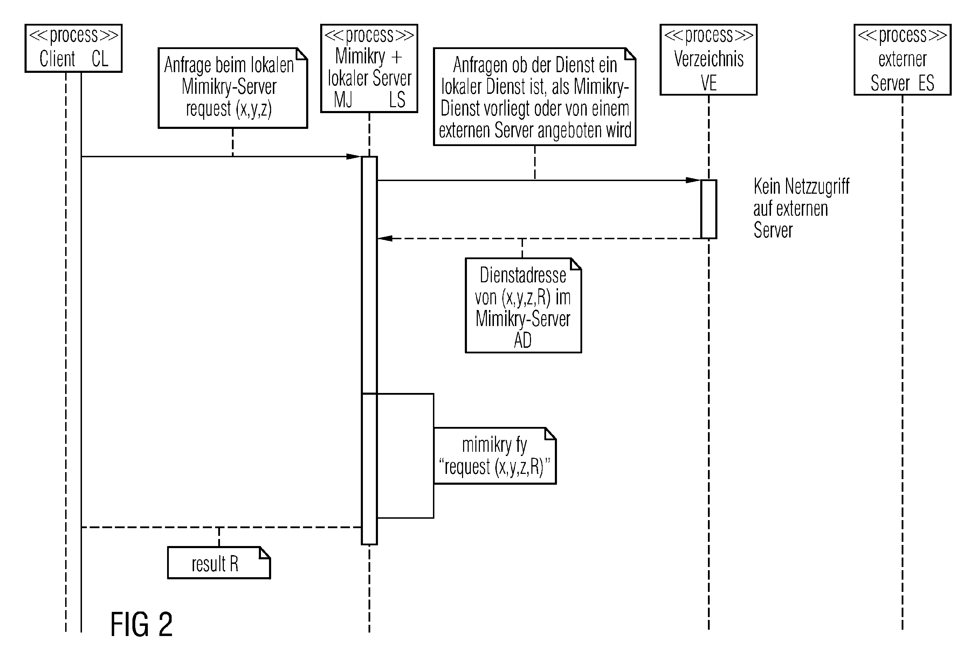

In Figur 2 ist ein Sequenzdiagramm eines weiteren Teils des Verfahrens zum Nachbilden eines Dienstes dargestellt. Funktionsgleiche Bezugszeichen aus Figur 1 wurden übernommen.

Es wird ein Verfahren beschrieben, das der Mimikry-Server MI durchführt, wenn keine Netzverbindung zum externen Server ES verfügbar ist oder die in den Figuren 1 und 4 näher erläuterte, im Parameter "Q-ServiceResult" angegebenen Abschätzung der Qualität des Ergebnisses result R ergibt, dass ein Zugriff auf den externen Server ES nicht durchgeführt werden muss.

Das Sequenzdiagramm in Figur 2 illustriert, wie der Client CL beim Mimikry-Server MI eine Anfrage mit dem Parametertupel (x, y, z) stellt. Der Mimikry-Server MI überprüft beim Verzeichnis VE, ob der Dienst vom lokalen Server LS, vom Mimikry-Server MI oder von einem externen Server ES angeboten wird. In dem vorliegenden Fall wird die Adresse des sich auf dem Mimikry-Server MI befindenden Tupels der Parameter und des Ergebnisses (x, y, z, R, 1st ServiceCall, Q_ServiceResult) vom Verzeichnis VE zurückgeliefert.

Der Mimikry-Server MI erhält unter dieser Adresse das Tupel der Parameter und des Ergebnisses (x, y, z, 1st ServiceCall, Q_ServiceResult) und liefert das Ergebnis R an den Client CL, wenn die in Figur 4 näher erläuterte Auswertung der Parameter 1st ServiceCall, Q_ServiceResult positiv ist.

Die Parameter "1st ServiceCall" und Q_ServiceResult sind in den Figuren 1, 2 und 3 nicht gesondert in den Tupeln dargestellt.

Mimikry-Hosts können nur sowohl aktiv als auch passiv agieren. Gemeinsam ist beiden Modi, dass wenn ein Mimikry-Host einen Service-Aufruf zu einem anderen Host (beliebig, nicht nur Mimikry-Host) durchfuhrt, er diesen Aufruf als Mimikry-Dienst anbietet.

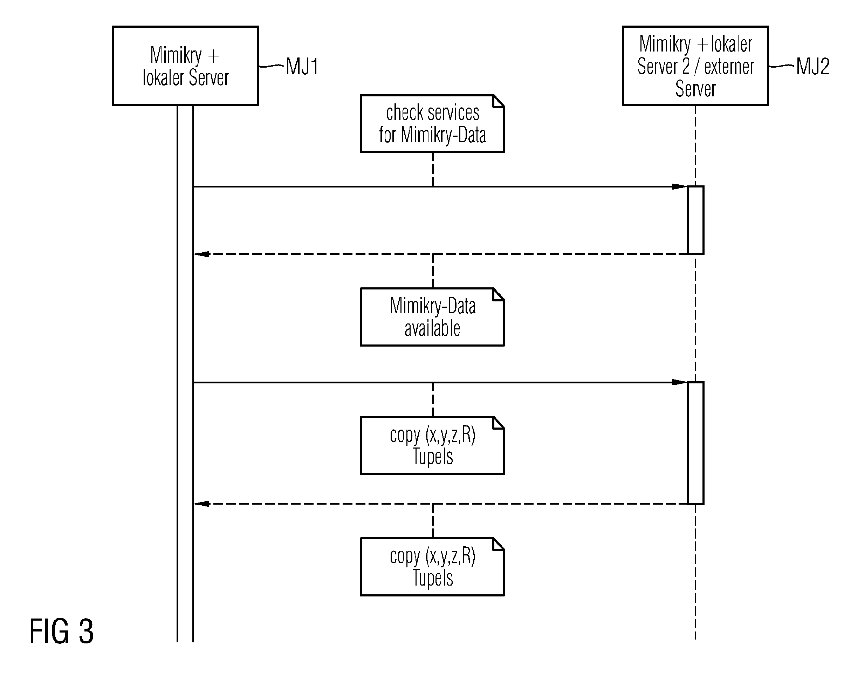

Aktiver Modus: Besteht zwischen zwei Mimikry-Hosts MI1, MI2 eine Netzwerkverbindung dann synchronisieren sie ihre aktuellen Mimikry-Dienste (Tupel und Beschreibungen), was in Figur 3 näher erläutert ist.

Im passiven Modus werden nur für an ihn gestellte Serviceaufrufe als Mimikry-Dienst etabliert, wie beispielhaft in den Figuren 1 und 2 dargestellt ist.

Hosts beider Ausprägung können jeweils in einem Netzwerk agieren.

In Figur 3 wird das Verfahren des Informationsaustauschs zwischen Mimikry-Servern MI1, MI2 beschrieben.

Durch einen Event, beispielweise durch Erkennen einer Netzverbindung zwischen zwei Mimikry-Server MI1, MI2, werden Mimikry-Daten in Form von (x,y,z,R) Tupel zwischen einem Mimikry-Server MI1 und einem externen Mimikry-Server MI2 durch die Befehle "Copy (s,y,z,R) Tupels" ausgetauscht. Nach Prüfung "check Services for Mimikry-Data" des Mimikry-Servers MI2 beim Mimikry-Server MI2 ist der positive Fall dargestellt, so dass beide Server Dienste mit denselben Signaturen anbieten und hierfür Mimikry-Daten vorliegen "Mimikry-Data available". Im Folgenden werden alle zwischengespeicherten (x, y, z, R) Tupel vom Mimikry Server MI1 zum Mimikry-Server MI2 kopiert "Copy (s,y,z,R) Tupels". Nach Erhalt kopiert der Mimikry-Server MI2 seine Tupel zum Mimikry-Server MI1 "Copy (s,y,z,R) Tupels".

Die permanente Aktualität der Ergebnisse durch das Service-Mimikry-Verfahren kann nicht gewährleistet werden. Sowohl durch zeitliche Veränderung als auch durch Veränderung der Position können zurückgelieferte Ergebnisse Result R in ihrer Qualität schwanken. Im Folgenden wird ein Verfahren zur dynamischen kontext-abhängigen Bestimmung der Qualität eines Service-Ergebnisses Result R beschrieben:
Der Aufruf eines Dienstes ändert sich somit von
Service (Input) → (Output, 1st ServiceCall)
zu
Service (Input) → (Output, 1st ServiceCall, Q_ServiceResult),
wobei Q_ServiceResult die Qualität des Rückgabewertes Result R des Dienstes beschreibt.

Beispiele für den Qualitätswert der Rückgabe sind in Figuren 4a, 4b und 4c beschrieben.

In Figur 4a ist die Qualität des Mimikry-Dienstes "Fußballergebnisse in der Bundesliga" in Abhängigkeit von der (Uhr)-zeit dargestellt: Nach Spielende, z.B. ab 23:00 Uhr bis Spielbeginn am nächsten Tag, z.B. ab 15:00 Uhr gibt es keine Änderung der Fußballergebnisse, somit ist die Qualität Q_Resultservice des (Fußball-)Ergebnisses Result R in diesem Zeitraum 100%. Zwischen 15:00 Uhr und 23:00 Uhr kann sich das Ergebnis stündlich oder gar minütlich ändern, somit ist die Qualität des Ergebnisses Result R 0%, d.h. die Fußballergebnisse sind nicht mehr aktuell. Es ist somit ein absoluter Zeitpunkt, hier 15:00 Uhr vorhanden, ab dem das Ergebnis keine Gültigkeit mehr besitzt.

In Figur 4b ist die Qualität des Mimikry-Dienstes "Füllstandsbestimmung eines Behälters"" in Abhängigkeit von der Zeit dargestellt. Der letzte bekannter Füllstand vom letzten Serviceaufruf request (x,y,z) zum Zeitpunkt t0=1st ServiceCall eines Behälters liegt bei 70%. Der Behälter wird noch befüllt wird, wobei der Befüllungsvorgang noch voraussichtlich x Stunden dauern wird. Der geschätzte Füllstand (mindestens 70%) kann durch die verstrichene Zeit interpoliert bzw. geschätzt werden. Die Qualität Q_ServiceResult dieser Schätzung verbleibt für einen kurzen Zeitraum t0 bis t1 bei annähernd 100% und nimmt dann über die Zeit t1 bis t2 linear ab.

In Figur 4c ist die Qualität des Mimikry-Dienstes "Wettervorhersage" in Abhängigkeit von der Zeit dargestellt. Die Korrektheit der Wahrscheinlichkeit der Wettervorhersage "Sonne" ist anfangs hoch (Kurve W1), fällt jedoch über die Zeit stark ab (Kurve W2).

Im Folgenden ist die Qualität des Ergebnisses des Mimikry-Dienstes "Positionsbestimmung" (nicht figürlich) in Abhängigkeit von der Zeit mit zwei verschiedenen Berechnungsmethoden dargestellt. Der Dienst "Positionsbestimmung" kann beispielsweise für ein Mobiltelefon geeignet sein, das nicht immer mit dem Kartenserver oder dem GPS-Satelliten verbunden ist. Figur 4b kann hier für die Beschreibung der Zeit- und Ortsabhängigkeit des Dienstes herangezogen werden.

Das Ergebnis des Dienstes ist gültig für eine GPS-Position zum Zeitpunkt t0 Durch Entfernen von der Position zum Zeitpunkt t1 wird simultan der Qualitätswert modifiziert, der im Zeitraum t1 bis t2 kontinuierlich absinkt.

Alternativ kann die Rückgabe des Qualitätswerts in Intervallwerten zu festem Zeitpunkt geschehen: GPS-Position + geschätztes Unschärfeintervall.

## Patentansprüche

1. Verfahren zum Nachbilden eines Dienstes (D), insbesondere auf einem Server (MI),
bei dem folgende Schritte durchgeführt werden:
- Erhalten einer ersten Anfrage (request (x,y,z)) von einem Client (CL) zum Ausführen des Dienstes (D),
- Anfragen in einem Verzeichnis (VE), in dem die Adresse mit dem Ort (MI, MI1, MI2) des Dienstes (D) zur Verfügung steht,
- Erhalten der Antwort von dem Verzeichnis (VE) mit der gewünschten Adresse (Dienstadresse, AD),
- Senden der ersten Anfrage (request (x,y,z)) an die Adresse (Dienstadresse AD),
- Erhalten einer Antwort des Dienstes (D) mit einem Ergebnis (Output, Result R),
- Senden des Ergebnisses (Output, Result R) an den Client (CL),
- Zwischenspeichern der Parameter der ersten Anfrage (request x,y,z)) und des Ergebnisses (output, result R) für eine folgende Nachbildung des Dienstes (D),
- Senden der Adresse und des Orts (MI, MI1, MI2) der Nachbildung des Dienstes (D) an das Verzeichnis (VE).

2. Verfahren nach einem der vorigen Ansprüche, **dadurch gekennzeichnet, dass** folgende Schritte durchgeführt werden:
- Erhalten einer weiteren Anfrage (request (x,y,z)) von einem Client (CL) zum Ausführen des Dienstes (D),
- Anfragen in einem Verzeichnis (VE), in dem die Adresse mit dem Ort (MI, MI1, MI2) des Dienstes (D) oder der Nachbildung des Dienstes (D) zur Verfügung steht,
- Auswählen der Adresse mit der Nachbildung des Dienstes (D), wenn die Parameter (x,y,z) der weiteren Anfrage mit den Parametern (x,y,z) der ersten Anfrage übereinstimmen,
- Erhalten der Antwort von dem Verzeichnis (VE) mit der gewünschten Adresse (Dienstadresse, AD),
- Senden der Anfrage (request (x,y,z)) an die gewünschte Adresse (Dienstadresse AD),
- Auslesen des Ergebnisses (output, result R) aus dem Zwischenspeicher, in dem die Parameter der ersten Anfrage (request x,y,z)) und des Ergebnisses (output, result R) für eine folgende Nachbildung des Dienstes (D) gespeichert sind,
- Senden des Ergebnisses (Output, Result R) an den Client (CL).

3. Verfahren nach einem der vorigen Ansprüche, **dadurch gekennzeichnet, dass** folgende Schritte durchgeführt werden:
- unbedingtes Ausführen des Dienstes (D), wenn der Ort (MI, MI1, MI2) des Dienstes (D) und der Ort (MI, MI1, MI2) der Nachbildung des Dienstes (D) miteinander übereinstimmen.

4. Verfahren nach einem der vorigen Ansprüche, **dadurch gekennzeichnet, dass** folgende Schritte durchgeführt werden:
- Erfassen des Zeitpunkts (1st ServiceCall) des Erhaltens des Ergebnisses (output, Result R) des Dienstes (D),
- Zwischenspeichern des Zeitpunkts (1st ServiceCall) als zusätzlicher Parameter der Parameter der ersten Anfrage (request x,y,z)) und des Ergebnisses (output, result R) für eine folgende Nachbildung des Dienstes (D) und zur eindeutigen Identifizierbarkeit und/oder für die Ermittlung der Qualität (Q_ServiceResult) des Ergebnisses (output, result R) der Nachbildung des Dienstes (D).

5. Verfahren nach einem der vorigen Ansprüche, **dadurch gekennzeichnet, dass** folgende Schritte durchgeführt werden:
- Ermitteln der Qualität (Q ServiceResult) des Ergebnisses (output, result R) der Nachbildung des Dienstes (D)
- Zwischenspeichern des Qualität (Q_ServiceResult) als zusätzlicher Parameter der Parameter der ersten Anfrage (request x,y,z)) und des Ergebnisses (output, result R) für eine folgende Fallunterscheidung.

6. Verfahren nach einem der vorigen Ansprüche, **dadurch gekennzeichnet, dass** der Zeitpunkt (1st Service Call) des vorzugweise erstmaligen Aufrufs des Dienstes von dem Service/Dienstprovider oder durch den Dienst des Verfahrens zur Nachbildung des Dienstes (D) in seiner Mimikry Funktion vergeben wird.

7. Verfahren nach einem der vorigen Ansprüche, **dadurch gekennzeichnet, dass** folgende Schritte durchgeführt werden:
- Synchronisieren der Ergebnisse (output, result R) an sich an verschiedenen Orten (MI,MI1,MI2) befindlichen Zwischenspeichern, in denen jeweils die eine folgende Nachbildung des Dienstes (D) gespeichert sind, sobald eine Netzverbindung zwischen den beiden Orten verfügbar ist.

8. Verfahren nach einem der Ansprüche 1 bis 5, **dadurch gekennzeichnet, dass**
der Server/Host, auf dem das Verfahren zum Nachbilden eines Dienstes (D) lauffähig bzw. eingerichtet ist, nur an ihn gestellte Anfragen (request (x,y,z)) als Dienst zum Durchführen des Verfahrens zum Nachbilden eines Dienstes (D) etabliert.

9. Verfahren nach einem der vorigen Ansprüche, **dadurch gekennzeichnet, dass** das Verfahren zum Nachbilden eines Dienstes (Mimikry-Service) auf einem Server/Host (MI, MI1, MI2) ausgeführt wird, dem an ein virtueller und/oder physikalischer Ort zugeordnet ist.

10. Verfahren nach einem der vorigen Ansprüche, **dadurch gekennzeichnet, dass** folgende Schritte durchgeführt werden:
- Ermitteln der Qualität (Q ServiceResult) des Ergebnisses (output, result R) der Nachbildung des Dienstes (D), indem folgende Schritte erfolgen:
- die ermittelte Qualität (Q ServiceResult) ist abhängig von dem Zeitintervall (t-t0) zwischen dem ersten Zeitpunkt (t0=1st ServiceCall) des Erhaltens des Ergebnisses (output, Result R) des Dienstes (D), das durch die erste Anfrage (request x,y,z)) ausgelöst wurde, und dem zweiten Zeitpunkt des Nachbildens des Dienstes, das durch die zweite Anfrage (request (x,y,z)) ausgelöst wurde.

11. Verfahren nach Anspruch 9, **dadurch gekennzeichnet, dass** die Qualität (Q_ResultService) zwischen dem ersten Zeitpunkt (t0) und einem weiteren Zeitpunkt (t1) bei annähernd 100% liegt, und ab dem weiteren Zeitpunkt (t1) bei 0% liegt.

12. Verfahren nach Anspruch 9, **dadurch gekennzeichnet, dass** die Qualität (Q_ResultService) zwischen dem ersten Zeitpunkt (t0) und einem weiteren Zeitpunkt (t1) bei annähernd 100% liegt, und ab dem weiteren Zeitpunkt (t1) linear abfällt.

13. Verfahren nach Anspruch 9, **dadurch gekennzeichnet, dass** die Qualität (Q_ResultService) eine Kurve darstellt, deren Charakteristik abhängt von der Länge des Zeitintervalls (t-t0).

14. Verfahren nach einem der vorigen Ansprüche, **dadurch gekennzeichnet, dass**
- der Dienst des Verfahrens zum Nachbilden des Dienstes (D) zu vorgegebenen Zeitpunkten den Dienst (D) aufruft (request (x,y,z)) und die im Zwischenspeicher vorhandenen Parameter mit dem Ergebnis (output, result R) des Dienstes im Zwischenspeicher aktualisiert.

15. Verfahren nach einem der Ansprüche x bis 13, **dadurch gekennzeichnet, dass**
- der Dienst des Verfahrens zum Nachbilden des Dienstes (D) vor Rückgabe des Ergebnisses (output, result R) an den Client (CL) die ermittelte Qualität (Q_ResultService) mit einem vorgegebenen Wert vergleicht, wobei folgende Schritte durch eine Fallunterscheidung erfolgen:
- Aufrufen des Dienstes (D), Aktualisieren aller im Zwischenspeicher vorhandenen Parameter und Rückgabe des Ergebnisses (output, result R) an den Client (CL), wenn die ermittelte Qualität (Q_ResultService) wenn über dem vorgegebenen Wert liegt,
- Ausgabe einer Fehlermeldung, vorzugsweise Qualität des Dienstes zu niedrig oder keine Netzverbindung verfügbar, an den Client (CL), wenn die ermittelte Qualität (Q_ResultService) wenn unter dem vorgegebenen Wert liegt.

16. Verfahren nach einem der vorigen Ansprüche, **dadurch gekennzeichnet, dass** folgende Schritte durchgeführt werden:
- Liefern einer identischen WSDL-Beschreibung des Dienstes (1) bei Anpassen der Adresse (Dienstadresse, AD).

17. Computerverarbeitungseinheit zum Durchführen des Verfahrens nach einem der vorigen Verfahrensansprüche.
